Europäisches Patentamt

European Patent Office

Office européen des brevets

(10)

(11) Publication number: **0 216 762**
**B1**

## EUROPEAN PATENT SPECIFICATION

(12)

(45) Date of publication of patent specification: **30.01.91**

(51) Int. Cl.⁵: **B 29 C 73/00**

(21) Application number: **85901863.2**

(22) Date of filing: **29.03.85**

(86) International application number:
**PCT/US85/00548**

(87) International publication number:
**WO 86/05738 09.10.86 Gazette 86/22**

(54) **RESIN-CLOTH STRUCTURAL SYSTEM.**

<table>
<tr><td>

(43) Date of publication of application:
**08.04.87 Bulletin 87/15**

(45) Publication of the grant of the patent:
**30.01.91 Bulletin 91/05**

(84) Designated Contracting States:
**BE DE FR GB IT NL SE**

(56) References cited:
**GB-A-1 565 564**
**US-A-2 902 388**
**US-A-3 193 438**
**US-A-3 235 289**
**US-A-3 388 016**
**US-A-3 531 345**
**US-A-3 682 179**
**US-A-3 694 301**
**US-A-3 847 722**

**No relevant documents have been disclosed.**

</td><td>

(73) Proprietor: **NEPTUNE RESEARCH, INC.**
**2611 Old Okeechobee Road**
**West Palm Beach, FL 33460 (US)**

(72) Inventor: **LAZZARA, Richard**
**1814 Nort R Street**
**Lake North, FL 33460 (US)**

(74) Representative: **Modiano, Guido et al**
**MODIANO, JOSIF, PISANTY & STAUB Modiano**
**& Associati Via Meravigli, 16**
**I-20123 Milano (IT)**

</td></tr>
</table>

Courier Press, Leamington Spa, England.

## Description

This invention relates in general to construction materials for a wide variety of uses, as, for example, in repairing cracks, holes and dents in the hulls and bodies of boats and land vehicles, leaks in gas and liquid conduits such as exhaust pipes and water pipes, and leaks in gas and liquid tanks and other containers; repairing fractured poles, booms, spars, antennas, and the like, and strengthening similar structures that are not fractured; patching roofs, gutters, and drainpipes; sealing leaking containers of pressurized fluids, such as air conditioning systems, swimming pools, and hydraulic hoses; and electrically insulating all manner of articles.

Known from US-A-3,847,722, upon which the preambles of claims 1 and 2 are based, is a material comprising a resin and a permeable, deformable substrate bearing particulate, permeable, fibrous bodies. Useful particulate bodies include cork, wood, vermiculite, twine, leather, paper, and similar materials, i.e., essentially any porous, permeable, deformable body that may be impregnated with the resin, and that has adequate deformability so that a workman can wedge the impregnated material into cracks, holes, fissures or other voids sought to be sealed. The resin, consisting of an isocyanate-terminated hydrophillic urethane pre-polymer, is poured over the bodies so that they become impregnated. The bodies swell upon exposure to water and become wedged into the hole or crevice to be sealed, and the pre-polymer reacts with the water to form a swollen, adherent waterinsoluble hydrogel.

However, such known material is not devoid of inconveniences, not least of which is the fact that it does not permit a repair to be effected directly on a surface or over a hole in a thin layer of material, where the particulate bodies can not be stuffed into a crack, hole or other void.

A further inconvenience of the known material resides in the fact that it can not be used for effecting repairs under water without incurring some premature curing and swelling of the impregnated particles.

According to one aspect of the invention, the above-mentioned inconveniences encountered in the use of the known material are overcome, and the advantages which will become apparent from the following description are achieved, by a method of applying a construction material to an article as defined in claim 1.

According to another aspect of the invention, the above-mentioned inconveniences encountered in the use of the known material are overcome, and the advantages which will become apparent from the following description are achieved, by a method of applying a construction material to an industrial article as defined in the charactering clause of claim 2.

More particularly, the invention provides construction materials for the foregoing and other purposes comprising a flexible web impregnated with a pliable mastic in a sealed package which maintains its contents in a stable soft and pliable condition until opened, after which the web is applied to the use intended and the mastic begins to harden in place upon exposure to water, or to only the moisture in the air. The mastic is able to harden and cure under water, salt or fresh.

Description of an Embodiment

Other advantages and features of the invention are described in the following description of an exemplary embodiment, with reference to the accompanying drawing, in which:

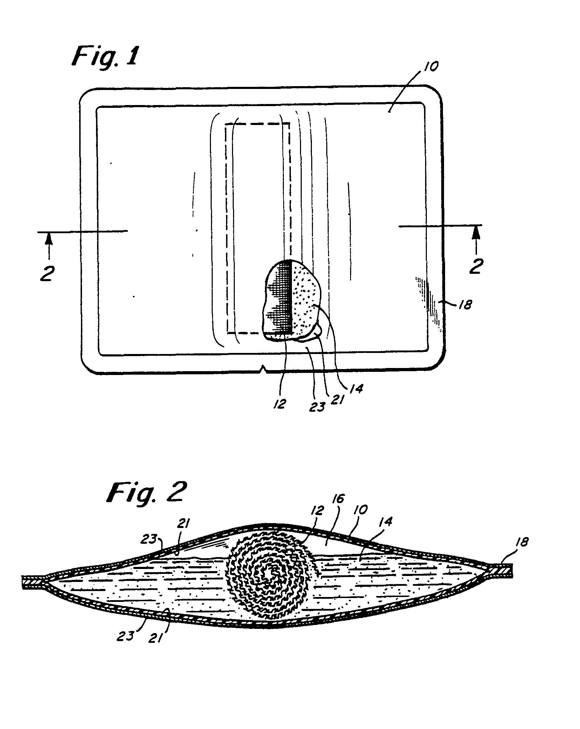

FIG. 1 is a plan view of a rolled web in a sealed package; and

FIG. 2 is a section on line 2-2 of FIG. 1.

A sealed package or envelope 10 enclosing a piece of fiberglass web, or fabric, (woven or non-woven) such as a fiberglass cloth 12 and a charge of mastic which is suitable for use in the invention, such as a resin 14, which impregnates the cloth 12, together with a charge of nitrogen gas 16. A non-woven web made of a bundle of parallel fibers impregnated with the resin is useful for some application, such as wrapping a pipe. The envelope 10 is desirably a bag of moisture-impervious material (e.g.: a multi-layer plastics 21 and metal foil 23 material) which is sealed at its edges 18. An aluminum outer foil 23 is suitable. There may be several layers 23-21-23-21, etc., in the envelope. The nitrogen gas serves to isolate the resin 14 from air and moisture, so that the resin remains intact. A suitable woven fiberglass cloth 12 is available commercially from Carolina Narrow Fabric Company, P.O. Box 1400, Winston-Salem, North Carolina 27102, identified as "Style #520-3," or Mutual Industries Columbia Glas-Tape #2964. The resin 14 which is presently used in practicing the invention is a product of Orthocast Inc., 3896 Burns Road, Palm Beach Gardens, Florida 33410, identified as "Orthocast #6 formulation," and described as an aeromatic polyethylene urethane prepolymer which cures to form a hard semi-flexible polymer containing both polyurethane and polyurea functional groups.

For repairing cracks and holes under water in boat hulls, the envelope 10 is opened and the resin-impregnated fiberglass-cloth patch 12 is applied directly over the hole or stuffed into the crack. The resin 14 begins to harden immediately. The rapidity of the set is dependent to some degree on the temperature of the water. I have discovered that complete curing and set will proceed under water, whether the water is salt water or fresh water. Thus, the invention provides a reliable patch for boat hulls which can be applied directly from its package to an underwater crack or hole, and which will harden to an effective patch while under, water, with no further physical or chemical step being required.

For repairing hoses, pipes, exhaust and waste lines, the fiberglass-cloth patch 12 is preferably elongate in shape. A densely-woven fiberglass cloth such as Carolina #1044 applied in layers is preferred to form a good seal to leaking fluids. Upon opening the envelope 10, the patch is wrapped in several layers around the hose or pipe, and the resin is immediately catalyzed by exposure to environmental humidity. It can be soaked in water, prior to use, if desired, to provide additional moisture in a low-humidity environment, or to increase the rapidity of set.

The resin 14 has no odor and it will not support combustion. It will adhere to metals, fiberglass cloth, PVC and other materials, and it is resistant to gasoline, oil, diesel fuel and most solvents in the hardened state. It is electrically a non-conductor.

For repairing a fuel or holding tank, the patch can be applied to the outside of the tank. For repairing a leaking swimming pool, the patch can be applied to the inside of the pool, under water.

The invention is suitable in particular for outdoor and marine use to insulate and moisture-seal electric wire junctions. Ordinary friction tape can insulate such junctions but cannot moisture-seal them. The usual practice is to make electric wire junctions in a box fitted with one or more stuffing tubes and a water-tight cover. This invention offers the possibility to eliminate junction boxes outdoors and for marine applications.

For repairing a roof, the patch is applied to the roof surface. The resin-impregnated web is particularly suited to repairing metal roofs and building-exterior surfaces since the illustrated resin adheres readily to metals, and particularly when used with a densely-woven fabric 12 provides a water-integrity seal when the resin has hardened.

The illustrated resin-impregnated web system of the invention has been found to be uniquely effective in providing a repair patch or leak seal in air or water directly from a package without mixing, measuring or application of other chemicals or special environment, which will set within minutes under water or in the presence of water or moisture. The web can be woven, or non-woven, and the web material can be chosen from a wide variety of synthetic and natural starting materials and fibers. For structural strength, leak sealing, good adhesion to metal surfaces, and roof patching, the denser webs such as Reichhold #821-075 MAT, Carolina Fabric #1544-C, and Columbia Glas-Tape Style #2964 can be utilized. Forming a repair from the resin impregnated web above water can be accelerated by placing the freshly-opened web-and-mastic patch under water for about 20 seconds. Accordingly, it is useful to provide a bucket of water when applying the invention in an above-water situation.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of applying a construction material to an article, characterized in that it comprises the steps of: impregnating a fabric material (12) with a resinous mastic (14) which hardens upon exposure to aqueous moisture, holding said mastic-impregnated fabric (12) in an isolating medium (10, 21, 23, 16) in order to isolate it from moisture until application thereof to said article, and applying said mastic-impregnated fabric (12) to said article directly from said isolating medium (10, 21, 23, 16) in the presence of aqueous moisture or water.

2. A method of applying a construction material to an industrial article, for substantially water-tight repairing, reinforcing, patching and sealing of articles such as structures, vehicle bodies, boat bodies, tanks, containers, conduits, water pipes, pipes, electrical conductors and joints, comprising the steps of: impregnating a piece of material (12) with a resinous pliable-mastic material (14) having the property that while in its pliable condition it readily adheres to surfaces of articles, and the further property that upon exposure to aqueous moisture in a gaseous medium, or water in the atmosphere or under water, it hardens spontaneously, applying said impregnated material (12) to an industrial article in the presence of moisture, and, curing said resinous material (14) to form a structural member adhered to said article, characterized in that said impregnated material (12) is an impregnated fabric material (12), and in that said method comprises the intermediate steps of: holding said impregnated fabric material (12) in a moisture-impervious envelope (10, 21, 23) together with a charge of substantially dry gas (16) until used, and applying said impregnated fabric material (12) to said industrial article directly from said envelope (10, 21, 23).

3. A method according to claim 2, characterized in that said dry gas (16) is nitrogen.

4. A method according to claim 1 or 2, characterized in that said fabric material (12) is a woven fiberglass cloth.

5. A method according to claim 1 or 2, characterized in that said fabric material (12) is a non-woven fabric.

6. A method according to claim 1 or 2, characterized in that said mastic (14) is a polyurethane resin.

7. A method according to claim 1 or 2, characterized in that said mastic impregnated fabric (12) is applied to said article under water.

8. A method according to claim 1, 2, or 7, characterized in that said mastic impregnated fabric (12) is applied to said article under salt water.

9. A method according to claim 1, 2, 7, or 8, characterized in that said mastic impregnated fabric (12) is stuffed into a hole or crack in said article.

10. A method according to claim 1, 2, 7, or 8, characterized in that said mastic impregnated fabric (12) is adhered to a surface of said article.

11. A method according to claim 1 or 2, characterized in that said mastic impregnated fabric (12) is adhered directly to a joint of uninsulated electrical conductors.

12. A method according to one or more of the preceding claims, characterized in that said mastic impregnated fabric is adhered directly to a waterpipe over a leak.

## Patentansprüche

1. Verfahren zum Aufbringen eines Konstruktionsmaterials auf einen Gegenstand, dadurch gekennzeichnet, daß es folgende Schritte aufweist: Tränken eines Stoffmaterials (12) mit einem Harzmastix (14), der, wenn er wäßriger Feuchtigkeit ausgesetzt wird, erhärtet, Halten des mastixgetränkten Stoffes (12) in einem isolierenden Medium (10, 21, 23, 16), um ihn bis zu seinem Aufbringen auf den Gegenstand gegen Feuchtigkeit zu isolieren und Aufbringen des mastixgetränkten Stoffes (12) auf den Gegenstand direkt aus dem isolierenden Medium (10, 21, 23, 16) heraus in Anwesenheit von wäßriger Feuchtigkeit oder Wasser.

2. Verfahren zum Aufbringen eines Konstruktionsmaterials auf einen industriellen Gegenstand, zum weitgehend wasserdichten Reparieren, Verstärken, Flicken und Versiegeln von Gegenständen, wie Bauten, Fahrzeugkörpern, Bootskörpern, Tanks, Behältern, Leitungen, Wasserrohren, Rohren, elektrischen Leitern und Verbindungen, mit folgenden Schritten: Tränken eines Materialstückes (12) mit einem harzigen, biegsamen Mastixmaterial (14), das die Eigenschaft hat, daß es, während es im biegsamen Zustand ist, ohne weiteres an den Oberflächen von Gegenständen klebt und die weitere Eigenschaft hat, daß es, wenn es wäßriger Feuchtigkeit in einem gasförmigen Medium oder Wasser in der Atmosphäre oder unter Wasser ausgesetzt wird, spontan erhärtet, Aufbringen des getränkten Materials (12) auf einen industriellen Gegenstand in Anwesenheit von Feuchtigkeit, und Erhärten des harzigen Materials (14), um ein Bauteil zu formen, das an den Gegenstand geklebt ist, dadurch gekennzeichnet, daß das getränkte Material (12) ein getränktes Stoffmaterial (12) ist, und dadurch, daß daß das Verfahren folgende Zwischenschritte aufweist: Halten des getränkten Stoffmaterials (12) in einer feuchtigkeitsundurchlässigen Umhüllung (10, 21, 23) zusammen mit einer Füllung an im wesentlichen trockenem Gas (16) bis zur Benutzung, und Aufbringen des getränkten Stoffmaterials (12) auf den industriellen Gegenstand direkt aus der Umhüllung (10, 21, 23).

3. Verfahren nach Anspruch 2, dadurch gekennzeichnet, daß das trockene Gas (16) Stickstoff ist.

4. Verfahren nach Anspruch 1 oder 2, dadurch gekennzeichnet, daß das Stoffmaterial (12) ein gewebtes Glasfasertuch ist.

5. Verfahren nach Anspruch 1 oder 2, dadurch gekennzeichnet, daß das Stoffmaterial (12) ein nicht gewebter Stoff ist.

6. Verfahren nach Anspruch 1 oder 2, dadurch gekennzeichnet, daß der Mastix (14) ein Polyurethan-Kunstharz ist.

7. Verfahren nach Anspruch 1 oder 2, dadurch gekennzeichnet, daß der mastixgetränkte Stoff (12) auf den Gegenstand unter Wasser aufgebracht wird.

8. Verfahren nach Anspruch 1, 2 oder 7, dadurch gekennzeichnet, daß der mastixgetränkte Stoff (12) auf den Gegenstand unter Salzwasser aufgebracht wird.

9. Verfahren nach Anspruch 1, 2, 7 oder 8, dadurch gekennzeichnet, daß der mastixgetränkte Stoff (12) in ein Loch oder einen Riß in dem Gegenstand gestopft wird.

10. Verfahren nach Anspruch 1, 2, 7 oder 8, dadurch gekennzeichnet, daß der mastixgetränkte Stoff (12) auf eine Oberfläche des Gegenstandes geklebt wird.

11. Verfahren nach Anspruch 1 oder 2, dadurch gekennzeichnet, daß der mastixgetränkte Stoff (12) direkt auf eine Verbindung von unisolierten elektrischen Leitern geklebt wird.

12. Verfahren nach einem oder mehreren der vorhergehenden Ansprüche, dadurch gekennzeichnet, daß der mastixgetränkte Stoff direkt auf ein Wasserrohr über einer undichten Stelle aufgeklebt wird.

## Revendications

1. Procédé d'application d'un matériau structural à un objet, caractérisé en ce qu'il comporte les étapes consistant à: imprégner un tissu (12) d'un mastic résineux (14) durcissant par exposition à une humidité aqueuse, conserver ledit tissu (12) imprégné de mastic dans un milieu isolant (10, 21, 23, 16) afin de l'isoler de l'humidité jusqu'à son application audit objet, et appliquer ledit tissu (12) imprégné de mastic audit objet directement depuis ledit milieu isolant (10, 21, 23, 16) en présence d'humidité aqueuse ou d'eau.

2. Procédé d'application d'un matériau structural à un objet industriel, pour une réparation, un renforcement, un raccommodage et un scellement sensiblement étanches à l'eau d'objets tels que des structures, carrosseries de véhicules, coques de bateaux, réservoirs, conteneurs, conduits, canalisations d'eau, canalisations, conducteurs et raccords électriques, comportant les étapes consistant à: imprégner un morceau de matériau (12) d'un mastic souple résineux (14) possédant la propriété que, tant qu'il se trouve dans son état souple, il adhère facilement à des surfaces d'objets, et la propriété supplémentaire selon laquelle, par exposition à une humidité aqueuse dans un flux gazeux, ou dans l'eau dans l'atmosphère ou sous l'eau, il durcit spontanément, appliquer ledit matériau imprégné (12) à un objet industriel en présence d'humidité, et, durcir ledit matériau résineux (14) pour former un élément structural adhérant audit objet, caractérisé en ce que ledit matériau imprégné (12) est un

4

tissu imprégné (12) et en ce que ledit procédé comporte les étapes intermédiaires consistant à: conserver ledit tissu imprégné (12) dans une enveloppe imperméable à l'humidité (10, 21, 23) conjointement avec une charge de gaz sensiblement sec (16) jusqu'à l'utilisation, et appliquer ledit tissu imprégné (12) audit objet industriel directement à partir de ladite enveloppe (10, 21, 23).

3. Procédé selon la revendication 2, caractérisé en ce que ledit gaz sec (16) est de l'azote.

4. Procédé selon la revendication 1 ou 2, caractérisé en ce que ledit tissu (12) est une nappe de fibres de verre tissées.

5. Procédé selon la revendication 1 ou 2, caractérisé en ce que ledit tissu (12) est un tissu non tissé.

6. Procédé selon la revendication 1 ou 2, caractérisé en ce que ledit mastic (14) est une résine polyuréthane.

7. Procédé selon la revendication 1 ou 2, caractérisé en ce que ledit tissu (12) imprégné de mastic est appliqué audit objet sous l'eau.

8. Procédé selon l'une quelconque des revendications 1, 2 ou 7, caractérisé en ce que ledit tissu (12) imprégné de mastic est appliqué audit objet dans de l'eau salée.

9. Procédé selon l'une quelconque des revendications 1, 2, 7 ou 8, caractérisé en ce que ledit tissu (12) imprégné de mastic est comprimé dans un trou ou une fissure dudit objet.

10. Procédé selon l'une quelconque des revendications 1, 2, 7 ou 8, caractérisé en ce que ledit tissu (12) imprégné de mastic est collé à une surface dudit objet.

11. Procédé selon la revendication 1 ou 2, caractérisé en ce que ledit tissu (12) imprégné de mastic est collé directement à un raccord de conducteurs électriques non isolés.

12. Procédé selon l'une quelconque des revendications précédentes, caractérisé en ce que ledit tissu imprégné de mastic est collé directement sur une canalisation d'eau au-dessus d'une fuite.

EP 0 216 762 B1

## Fig. 1

## Fig. 2

1